# EUROPÄISCHE PATENTANMELDUNG

(11) **EP 2 105 187 A1**
(43) Veröffentlichungstag der Anmeldung: **30.09.2009**
(21) Anmeldenummer: 08005846.4
(22) Anmeldetag: 27.03.2008
(51) Int. Cl.: B01D 53/14, B01D 53/62, C01B 31/20

(54) **Verfahren und Vorrichtung zum Abtrennen von Kohlendioxid aus einem Abgas einer fossilbefeuerten Kraftwerksanlage**

(71) Anmelder: SIEMENS AKTIENGESELLSCHAFT, 80333 München (DE)
(72) Erfinder: Rost, Mike, 91058 Erlangen (DE); Schneider, Rüdiger, Dr., 65817 Eppstein (DE); Schramm, Henning, Dr., 60598 Frankfurt (DE)

(57) **Zusammenfassung**

Die Erfindung betrifft ein Verfahren zum Abtrennen von Kohlendioxid aus einem Abgas einer fossilbefeuerten Kraftwerksanlage, bei dem in einem Verbrennungsprozess (1) ein fossiler Brennstoff verbrannt wird, wobei ein kohlendioxidhaltiges Abgas (2) erzeugt wird, bei dem in einem Absorptionsprozess (3) kohlendioxidhaltiges Abgas (2) mit einem Absorptionsmedium in Kontakt gebracht wird, wobei Kohlendioxid von dem Absorptionsmedium aufgenommen wird, wobei ein beladenes Absorptionsmedium (4) und ein gereinigtes Abgas (5) gebildet wird, das von Kohlendioxid weitgehend befreit ist, bei dem das beladene Absorptionsmedium (4) in wenigstens einen ersten Teilstrom (6) und einen zweiten Teilstrom (7) aufgeteilt wird, und bei dem der erste Teilstrom (6) einem ersten Desorptionsprozess (8) zugeführt wird, wobei ein erstes regeneriertes Absorptionsmedium (9) und ein erstes Gas-Dampfgemisch (10) aus gasförmigen Kohlendioxid und dampfförmigen Absorptionsmedium gebildet wird, und der zweite Teilstrom (7) einem zweiten Desorptionsprozess (11) zugeführt wird, wobei Wärmeenergie aus dem ersten Desorptionsprozess (8) dem zweiten Desorptionsprozess (11) zugeführt wird.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage. Die Erfindung betrifft außerdem eine fossilbefeuerte Kraftwerksanlage mit einer Abscheidevorrichtung zum Abtrennen von Kohlendioxid aus einem Abgas.

Bei fossilbefeuerten Kraftwerksanlagen zur Erzeugung elektrischer Energie in großtechnischem Maßstab entsteht durch die Verbrennung eines fossilen Brennstoffes ein kohlendioxidhaltiges Abgas. Neben Kohlendioxid enthält das Abgas weitere Verbrennungsprodukte wie z.B. die Gase Stickstoff, Schwefeldioxid, Stickstoffoxid und Wasserdampf sowie Festkörperpartikel Stäube und Ruß. Das Abgas wird nach einer weitgehenden Abscheidung der Festkörperbestandteile in die Atmosphäre entlassen. Das sich in der Atmosphäre ansammelnde Kohlendioxid behindert die Wärmeabstrahlung unserer Erde und begünstigt durch den so genannten Treibhauseffekt eine Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post-combustion CO₂ separation) ist die Methode der ,Absorption-Desorption' oder der ,Tieftemperaturabscheidung (Cryogenic)' bekannt.

In großtechnischem Maßstab wird das beschriebene Abtrennen von Kohlendioxid mit dem Absorptions-Desorptionsverfahren mit einem Waschmittel durchgeführt. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet, gekühlt und verflüssigt werden. In flüssigem oder gefrorenem Zustand kann das Kohlendioxid dann einer Lagerung oder Verwertung zugeführt werden. Das regenerierte Lösungsmittel wird zur Absorberkolonne zurück geleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Gasgemisch ist insbesondere der sehr hohe Energieaufwand, der in Form von Heizenergie für die Desorption benötigt wird. Um diesem Problem entgegen zu wirken, sind aus dem Stand der Technik eine Reihe von Vorschlägen bekannt.

So beschreibt die DE 299 24 190 U1 die Zusammenführung von Lösungsmitteln unterschiedlicher Regenerieungsgrade und Rückführung in den Absorber. Dazu weist die vorgeschlagene Wiederaufbereitungsanlage zur Wiedergewinnung einer gasförmigen Komponente aus einem Prozessgas einen Absorber auf, der ein dünnes Lösungsmittel und ein halbdünnes Lösungsmittel benutzt, welche die gasförmige Komponente aus dem Prozessgas absorbiert, wodurch ein angereichertes Lösungsmittel, ein halb angereichertes Lösungsmittel und dünnes Prozessgas erzeugt wird. Ein Regenerator ist an den Absorber gekoppelt, worin der Regenerator die gasförmige Komponente aus dem angereicherten Lösungsmittel entfernt, wodurch das dünne Lösungsmittel und das halbdünne Lösungsmittel wiedergewonnen werden. Ein Element für Kontrolle des Lösungsmittelflusses ist an den Absorber gekoppelt und kombiniert mindestens einen Teil des halb angereicherten Lösungsmittels mit zumindest einem Teil des halbdünnen Lösungsmittels, um ein gemischtes Lösungsmittel zu bilden. Ein Kühler ist an den Absorber gekoppelt, der das gemischte Lösungsmittel kühlt. Das gekühlte Lösungsmittel wird anschließend durch ein verbindendes Element in den Absorber geführt. Durch diesen Prozess soll Energie zum regenerieren des Lösungsmittels eingespart werden können. Jedoch ist bei Integration der vorgeschlagenen Wiederaufbereitungsanlage in eine fossilbefeuerte Kraftwerksanlage, lediglich mit einer relativ geringen Verbesserung der Effizienz der Kraftwerksanlage zu rechnen, da die Wärmeenergie zum Betreiben des Regenerators nach wie vor aus dem Heißdampf des Kraftwerksprozesses entnommen werden muss, was den Wirkungsgrad der Kraftwerksanlage signifikant schmälert.

Genereller Nachteil an bekannt Abtrennverfahren für Kohlendioxid aus einem Abgas, die in oder nach einen Kraftwerksprozess geschaltet sind, ist insbesondere der signifikante Wirkungsgrad verschlechternde Einfluss der Abtrennverfahren auf den Kraftwerksprozess. Zu dieser Wirkungsgradverschlechterung kommt es, da die Energie zur Durchführung des Abtrennverfahrens aus dem Kraftwerksprozess entnommen werden muss. Die Wirtschaftlichkeit einer fossilbefeuerten Kraftwerksanlage mit Kohlendioxidabtrennungsvorrichtung, die in oder nach die fossilbefeuerte Kraftwerksanlage geschaltet ist, ist daher deutlich geringer als ohne.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz bei zugleich günstigem Gesamtanlagenwirkungsgrad des Kraftwerksprozesses ermöglicht.

Eine weitere Aufgabe der Erfindung ist es, eine fossilbefeuerte Kraftwerksanlage mit integrierter Abscheidevorrichtung für Kohlendioxid vorzuschlagen, welche eine hohe Abscheideeffizienz bei zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage, bei dem in einem Verbrennungsprozess ein fossiler Brennstoff verbrannt wird, wobei ein kohlendioxidhaltiges Abgas erzeugt wird, bei dem in einem Absorptionsprozess kohlendioxidhaltiges Abgas mit einem Absorptionsmedium in Kontakt gebracht wird, wobei Kohlendioxid von dem Absorptionsmedium aufgenommen wird, wobei ein beladenes Absorptionsmedium und ein gereinigtes Abgas gebildet wird, das von Kohlendioxid weitgehend befreit ist, bei dem das beladene Absorptionsmedium in wenigstens einen ersten und einen zweiten Teilstrom aufgeteilt wird, und der erste Teilstrom einem ersten Desorptionsprozess zugeführt wird, wobei ein erstes regeneriertes Absorptionsmedium und ein erstes Gas- Dampfgemisch aus gasförmigen Kohlendioxid und dampfförmigen Absorptionsmedium gebildet wird, und der zweite Teilstrom einem zweiten Desorptionsprozess zugeführt wird, wobei Wärmeenergie aus dem ersten Desorptionsprozess dem zweiten Desorptionsprozess zugeführt wird.

Die Erfindung geht dabei von der Überlegung aus, dass in einer Kraftwerksanlage in einem Verbrennungsprozess durch die Verbrennung eines fossilen Brennstoffs ein kohlendioxidhaltiges Abgas erzeugt wird, wobei in einem dem Verbrennungsprozess angeschlossenen Absorptionsprozess das kohlendioxidhaltige Abgas mit einem Absorptionsmedium gereinigt wird, wobei das dadurch entstehende beladene Absorptionsmedium in zumindest zwei Teilströmen aufgeteilt wird, welche einem ersten Desorptionsprozess und einen zweiten Desorptionsprozess zugeführt werden, und wobei der zweite Desorptionsprozess mit Wärmeenergie aus dem ersten Desorptionsprozess betrieben wird. Diese Wärmeenergie ist die nach der Durchführung des Desorptionsprozesses verbleibende Restenergie.

Der erste Desorptionsprozess und der zweite Desorptionsprozess sind zueinander in Strömungsrichtung des beladenen Absorptionsmediums parallel geschaltet. Beiden Desorptionsprozessen wird beladenes Absorptionsmedium zugeführt. Ebenso wird in beiden Desorptionsprozessen von dem beladenen Absorptionsmedium Kohlendioxid abgegeben, wobei jeweils ein regeneriertes Absorptionsmedium gebildet wird. Das regenerierte Absorptionsmedium aus beiden Desorptionsprozessen kann nun wieder dem Absorptionsprozess zugeführt werden. Durch die Rückführung des Absorptionsmediums in den Absorptionsprozess wird das Absorptionsmedium zwischen dem Absorptionsprozess und dem Desorptionsprozess in einem Kreislauf geführt.

Durch die von der Erfindung vorgeschlagene Desorption in wenigstens zwei parallel angeordneten Desorptionsprozessen ist es möglich, die Wärmeenergie aus dem ersten Desorptionsprozess in den zweiten Desorptionsprozess zu übertragen, so dass der zweite Desorptionsprozess durch die Wärmeenergie aus dem ersten Desorptionsprozess betrieben werden kann. So muss lediglich dem ersten Desorptionsprozess Energie zugeführt werden. Dabei muss der Betrag an Energie derart eingestellt werden, dass sowohl durch den ersten Desorptionsprozess als auch durch den zweiten Desorptionsprozess Kohlendioxid von dem beladenen Absorptionsmedium abgegeben wird. Diese Energie kann angepasst an die im Kraftwerksprozess verfügbare Energie bereit gestellt werden. Dadurch wird der notwendige Bedarf an höherwertiger Energie in dem Desorptionsprozess reduziert. Dies ermöglicht einen deutlich effizienteren Betrieb einer Kohlendioxid-Abtrennungsvorrichtung, insbesondere bei einer Kraftwerksanlage, die gegenüber einer herkömmlichen Betriebsweise in der Energieausnutzung verbessert ist.

Fossile Brennstoffe können Gase wie z.B. Erdgas (Methan, Ethan, Propan, Butan, Ethen), Feststoffe wie z.B. Braun- oder Steinkohle und Flüssigkeiten wie z.B. Erdöl sein.

Die Energie zum Betreiben der Kohlendioxid-Abscheidevorrichtung einer fossilbefeuerten Kraftwerksanlage wird in der Regel durch Dampf bereit gestellt, der z.B. aus dem Kessel einer Dampfkraftwerksanlage oder dem Abhitzedampferzeuger einer Gas- und Dampfturbinenkraftwerksanlage entnommen wird. Da der zweite Desorptionsprozess durch Wärmeenergie aus dem ersten Desorptionsprozess betrieben wird, muss dem ersten Desorptionsprozess eine Dampfmenge bereitgestellt werden, die dem notwendigen Betrag an Energie zum Abgeben von Kohlendioxid von dem beladenen Absorptionsmedium aus beiden Desorptionsprozessen entspricht. Diese Dampfmenge kann dem Kraftwerksprozess an einer Stelle entnommen werden, an der die Entnahme des Dampfes den Wirkungsgrad des Dampfturbinen- bzw. Dampfkraftwerksprozesses wesentlich geringer reduziert als die Entnahme eines Dampfes mit anderen Druck- und Temperatur-Parametern an anderen Stellen.

Die Erhöhung des Wirkungsgrads des Dampfturbinen- bzw. Dampfkraftwerksprozesses führt zu einem besseren Gesamtwirkungsgrad und somit zu einem deutlich effizienteren Betrieb der fossilbefeuerten Kraftwerksanlage. Die Erfindung ermöglicht zudem die nachträgliche Integration einer Kohlendioxid-Abscheidevorrichtung in ein Kraftwerk unter Erfüllung ökonomischer Bedingungen.

Zweckmäßigerweise wird in einer vorteilhaften Ausgestaltung des Kohlendioxid-Abtrennungsverfahrens in analoger Weise zum ersten Desorptionsprozess auch im zweiten Desorptionsprozess ein zweites regeneriertes Absorptionsmedium und ein zweites Gas-Dampfgemisch aus gasförmigem Kohlendioxid und dampfförmigen Absorptionsmedium gebildet. Die Bildung des hier beschriebenen Gas-Dampfgemisches aus einem beladenen Absorptionsmediums kann durch Zufuhr von Wärmeenergie erfolgen. Dieser Vorgang wird auch als Auskochen oder Eindampfen beschrieben. Das beim Auskochen des beladenen Absorptionsmediums entstehende Gas-Dampfgemisch wird als Brüden bezeichnet. Durch einen Kondensationsprozess, in dem das Gas-Dampfgemisch kondensiert wird, kann die dabei freiwerdende Kondensationsenergie in Form von Wärme wiederum zur Unterstützung des Desorptionsprozesses genutzt werden. In dem Kondensationsprozess wird durch Kondensation des Dampfes Kohlendioxid separiert, so dass den Kondensationsprozess ein kondensiertes Absorptionsmedium und gasförmiges Kohlendioxid verlassen.

In einer besonderen Weiterbildung des Kohlendioxid-Abtrennungsverfahrens wird die dem zweiten Desorptionsprozess zur Verfügung gestellte Wärmeenergie aus dem ersten Gas-Dampfgemisch entnommen. Dies ermöglicht die Zuführung von Wärmeenergie aus dem ersten Desorptionsprozess in den zweiten Desorptionsprozess, so dass der zweite Desorptionsprozess durch die Wärmeenergie aus dem ersten Desorptionsprozess betrieben werden kann.

Vorteilhafterweise wird bei dem Kohlendioxid-Abtrennungsverfahren der erste Desorptionsprozess bei einer ersten Temperatur T1 durchgeführt, die höher eingestellt wird als eine zweite Temperatur T2, bei welcher der zweite Desorptionsprozess durchgeführt wird (T1>T2). Dadurch kann die verbleibende Restenergie aus dem ersten Desorptionsprozess für den zweiten Desorptionsprozess genutzt werden. Dabei kann der Energieeintrag in den ersten Desorptionsprozess derart eingestellt werden, dass die verbleibende Restenergie zur Durchführung des zweiten Desorptionsprozesses ausreicht. Der notwendige Energieeintrag für den ersten Desorptionsprozess wird unter anderem durch die erste Temperatur T1 eingestellt. Einfluss auf den notwendigen Energieeintrag hat insbesondere die Menge an zu desorbierendem Absorptionsmedium. Sowohl durch den ersten Desorptionsprozess als auch durch den zweiten Desorptionsprozess wird Kohlendioxid von dem beladenen Absorptionsmedium abgegeben.

In einer besonders vorteilhaften Weiterbildung des Kohlendioxid-Abtrennungsverfahrens wird die erste Temperatur T1 durch einen ersten Druck P1 im ersten Desorptionsprozess eingestellt, wobei dieser erste Druck P1 höher eingestellt wird als ein zweiter Druck P2 im zweiten Desorptionsprozess. Die Einstellung der unterschiedlichen Temperaturen durch unterschiedliche Drücke ist möglich, da sich Druck und Temperatur zueinander proportional verhalten (T∼P). Durch die unterschiedlichen Drücke sind in den beiden Desorptionsprozessen unterschiedliche Siedetemperaturen erzielbar. Wird durch einen hohen ersten Druck P1 eine hohe Siedetemperatur in der ersten Desorptionseinheit, und durch einen niedrigeren zweiten Druck P2 eine niedrige Siedetemperatur in der zweiten Desorptionseinheit eingestellt, wird ein Sieden in der zweiten Desorptionseinheit durch die übertragene Wärmeenergie aus der ersten Desorptionseinheit erreicht. Dadurch verringert sich der notwendige Energieeintrag für das Kohlendioxid-Abtrennungsverfahren. Als vorteilhaft hat sich eine Einstellung erwiesen, bei der der erste Druck P1 zwischen 1,6 bis 2,1 Bar, und der zweite Druck P2 zwischen 0,1 und 0,6 Bar eingestellt wird. Andere Druckwerte sind möglich. Da sich Druck und Temperatur allerdings nicht linear zueinander verhalten, können die Druckdifferenzen zwischen erstem und zweitem Druck bei anderen Druckwerten unterschiedlich sein. Da größere Druckdifferenzen konstruktionsbedingte Nachteile mit sich bringen, sind kleine Druckdifferenzen vorteilhaft.

Bei einer weiteren vorteilhaften Ausgestaltung des Kohlendioxid-Abtrennungsverfahrens wird der zweite Druck P2 über einen dem zweiten Desorptionsprozess nachgeschalteten Pumpprozess eingestellt. Durch diesen Pumpprozess wird der zweite Druck P2 dabei derart reduziert, dass er niedriger wird als der erste Druck P1. Der zweite Druck P2 kann dabei auch unter den Atmosphärendruck von im Mittel 1 Bar eingestellt werden. Durch ein herabsetzten des zweiten Drucks P2 auf einen Druck unterhalb des Atmosphärendrucks ist die Druckdifferenz zum ersten Druck P1 verringerbar.

In einer besonderen Ausgestaltung des Kohlendioxid-Abtrennungsverfahrens wird in dem ersten Desorptionsprozess und in dem zweiten Desorptionsprozess Kohlendioxid thermisch ausgetrieben. Dies ermöglicht die Nutzung von Wärme, die in dem Gesamtprozess der Kraftwerksanlage anfällt. Vorzugsweise wird thermische Energie durch Dampf bereit gestellt, der z.B. aus dem Kessel einer Dampfkraftwerkesanlage oder dem Abhitzedampferzeuger einer Gas- und Dampfturbinenkraftwerksanlage entnommen wird.

In einer vorteilhaften Weiterbildung des Kohlendioxid-Abtrennungsverfahrens werden der erste Teilstrom und der zweite Teilstrom eingestellt. Somit kann durch den ersten Teilstrom und den zweiten Teilstrom jeweils eine unterschiedliche oder gleich große Menge an beladenem Absorptionsmedium dem ersten und dem zweiten Desorptionsprozess zugeführt werden. Das Einstellen der Teilströme ist bei besonderen Betriebsweisen der Kohlendioxid-Abtrennungsvorrichtung von Vorteil. So kann z.B. beim Anfahren der Kohlendioxid-Abtrennungseinrichtung das beladene Absorptionsmedium zunächst vollständig dem ersten Desorptionsprozess zugeführt werden. Nach Erreichen der Betriebstemperatur im zweiten Desorptionsprozess kann dann dem zweiten Desorptionsprozess durch Einstellung des zweiten Teilstroms ebenfalls beladenes Absorptionsmedium zugeführt werden. Bei Reparatur- oder Wartungsarbeiten an einem der beiden Desorptionsprozesse kann ebenfalls das beladene Absorptionsmedium vollständig dem jeweils anderen Desorptionsprozess zugeführt werden. Wird das beladene Absorptionsmedium vollständig dem zweiten Desorptionsprozess zugeführt, kann dieser Desorptionsprozess hilfsweise durch Wärmeenergie betrieben werden, die durch Dampf bereitgestellt wird, der beispielsweise aus einer Anzapfleitung, direkt aus dem Kessel einer Dampfkraftwerkesanlage oder dem Abhitzedampferzeuger einer Gas- und Dampfturbinenkraftwerksanlage entnommen wird. Durch die Möglichkeit der Einstellbarkeit der beiden Teilströme kann auch im Teillastbereich des Kohlendioxid-Abtrennungsverfahrens ein Desorptionsprozess ohne den jeweils anderen Desorptionsprozess betrieben werden. Eine direkte Versorgung des zweiten Desorptionsprozesses mit Wärmeenergie z.B. in Form von Dampf ist grundsätzlich möglich. In einer bevorzugten Ausgestaltung des Kohlendioxid-Abtrennungsverfahrens werden der erste Teilstrom und der zweite Teilstrom zu gleichen Teilen eingestellt, so dass beide Teilströme gleichermaßen aufgeteilt werden.

Vorteilhafterweise wird in dem Kohlendioxid-Abtrennungsverfahrens ein Fluid als Absorptionsmedium verwendet. Gegenüber einem Festkörpermedium bietet ein Fluid in dem erfindungsgemäßen Verfahren erhebliche Vorteile bei der Durchleitung des Mediums in dem Prozess. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Ein besonders guter Prozessdurchlauf wird durch eine Lösung aus H2O und Aminderivaten als Lösungsmittel erzielt. Bekannt sind beispielsweise Lösungen unter den Namen MEA (Mono-Ethanolamin) und MDEA (Methyldiethanolamin).

In einer besonderen Ausgestaltung des Kohlendioxid-Abtrennungsverfahrens wird dem ersten Desorptionsprozess Wärmeenergie durch Dampf zugeführt, wobei der Dampf in einem ersten Wärmetauscherprozess mit dem beladenen Absorptionsmedium im Wärmetausch geführt wird. Der Dampf kann beispielsweise aus einer Anzapfleitung, dem Kessel einer Dampfkraftwerkesanlage oder dem Abhitzedampferzeuger einer Gas- und Dampfturbinenkraftwerksanlage entnommen werden. Bei einem ersten Druck P1 von in etwa 1,8 Bar und einem zweiten Druck P2 von in etwa 0,3 Bar ist es beispielsweise von Vorteil, dem ersten Desorptionsprozess einen Dampf mit einer Temperatur von mindestens 120°C zuzuführen.

In einer vorteilhaften Weiterbildung des Kohlendioxid-Abtrennungsverfahrens wird in einem ersten Vorwärmprozess Wärme von dem ersten regenerierten Absorptionsmedium entzogen, und an den ersten Teilstrom abgegeben. Ebenso vorteilhaft wird in einem zweiten Vorwärmprozess Wärme von dem zweiten regenerierten Absorptionsmedium entzogen, und an den zweiten Teilstrom abgegeben. Dadurch wird jeweils eine Abkühlung des regenerierten Absorptionsmediums erzielt und gleichermaßen eine Vorwärmung des Teilstroms mit beladenem Absorptionsmedium.

Dies spart zusätzliche Energie für Abkühlung und Erwärmung. Der Vorwärmprozess ist mit einem Wärmetauscherprozess vergleichbar.

In einer besonderen Weiterbildung des Kohlendioxid-Abtrennungsverfahrens wird das abgetrennte Kohlendioxid aus dem ersten Desorptionsprozess mit dem Kohlendioxid aus dem zweiten Desorptionsprozess zusammengeführt. Das Kohlendioxid wird in einem Komprimierungsprozess komprimiert, wobei ein komprimiertes oder verflüssigtes Kohlendioxid entsteht. Das komprimierte oder verflüssigte Kohlendioxid wird anschließend gespeichert.

Vorteilhafterweise kommt das beschriebene Kohlendioxid-Abtrennungsverfahren bei einem fossilbefeuerten Dampfkraftwerk oder bei einer kombinierten Gas- und Dampfturbinen-Kraftwerksanlage zur Anwendung. Die Implementierung des beschriebenen Kohlendioxid-Abtrennungsverfahrens in andere fossilbefeuerte Kraftwerksprozesse ist ebenso möglich. Insbesondere ist dies von Vorteil, wenn das Kohlendioxid-Abtrennungsverfahren vorhandene oder abfallende Energie des Kraftwerksprozesses nutzen kann.

Die auf eine fossilbefeuerte Kraftwerksanlage gerichtete Aufgabe der Erfindung wird gelöst durch eine fossilbefeuerte Kraftwerksanlage mit einer einer Verbrennungsvorrichtung nachgeschalteten und von einem kohlendioxidhaltigen Abgas durchströmbaren Abscheidevorrichtung für Kohlendioxid, wobei die Abscheidevorrichtung eine Absorptionsvorrichtung zur Aufnahme von Kohlendioxid aus dem kohlendioxidhaltigen Abgas und eine Desorptionsvorrichtung zur Abgabe des aufgenommenen Kohlendioxids umfasst, wobei die Absorptionsvorrichtung über eine Verbindungsleitung, mit der Desorptionsvorrichtung verbunden ist, wobei die Desorptionsvorrichtung eine erste Desorptionseinheit und wenigstens eine zweite Desorptionseinheit aufweist, und das von der Verbindungsleitung eine erste Teilstromleitung und eine zweite Teilstromleitung abzweigt, wobei die erste Teilstromleitung mit der ersten Desorptionseinheit verbunden ist und die zweite Teilstromleitung mit der zweiten Desorptionseinheit verbunden ist.

Dabei geht die auf eine fossilbefeuerte Kraftwerksanlage gerichtete Erfindung von der Überlegung aus, dass die Desorptionsvorrichtung eine erste Desorptionseinheit und wenigstens eine zweite Desorptionseinheit aufweist, die jeweils über eine erste und eine zweite Teilstromleitung mit der Verbindungsleitung verbunden sind. Die Desorptionseinheiten sind zueinander in Strömungsrichtung für ein durchleitbares Absorptionsmedium parallel geschaltet. Beide Desorptionseinheiten sind für die Abgabe von Kohlendioxid ausgestaltet. Abhängig von der Konfiguration der Kraftwerksanlage ist es von Vorteil, in der Desorptionsvorrichtung mehrere Desorptionseinheiten vorzusehen. Die einzelnen Desorptionseinheiten sind vorzugsweise als Abschnitte in der Desorptionsvorrichtung ausgestaltet. Dabei sind die Abschnitte räumlich voneinander getrennt. Eine Ausgestaltung, bei der die Desorptionseinheiten eigenständige Baueinheiten sind, ist möglich.

Die Energie zum Betreiben der beschriebenen Kohlendioxid-Abscheidevorrichtung ist in der Regel durch Dampf bereitgestellt, der z.B. aus einer Anzapfleitung, dem Kessel einer Dampfkraftwerksanlage oder dem Abhitzedampferzeuger einer Gas- und Dampfturbinenkraftwerksanlage entnommen wird. Da durch die Implementierung der Kohlendioxid-Abscheidevorrichtung in die fossilbefeuerte Kraftwerksanlage eine Einsparung an Prozessdampf erzielbar ist, erhöht sich der Gesamtwirkungsgrad der fossilbefeuerten Kraftwerksanlage.

Eine Desorptionsvorrichtung, die eine erste Desorptionseinheit und wenigstens eine zweite Desorptionseinheit aufweist, die jeweils über eine erste und eine zweite Teilstromleitung mit der Verbindungsleitung verbunden sind, kann im Vergleich zu einer herkömmlichen Desorptionsvorrichtung wesentlich optimierter betrieben werden. Durch eine optimierte Betriebsweise muss für die Desorption weniger Energie aufgewandt werden. Die eingesparte Energie kann dem Kraftwerksprozess z.B. zur Energieerzeugung zur Verfügung stehen. Ein wesentlich effizienterer Betrieb der Gesamtkraftwerksanlage ist somit möglich. Die Erfindung gestattet zudem die nachträgliche Integration einer Kohlendioxid-Abscheidevorrichtung unter Erfüllung ökonomischer Bedingungen.

In einer vorteilhaften Ausgestaltung der fossilbefeuerte Kraftwerksanlage umfasst die erste Desorptionseinheit eine erste Heizvorrichtung und einen ersten Kondensator, und die zweite Desorptionseinheit eine zweite Heizvorrichtung, wobei der erste Kondensator und die zweite Heizvorrichtung derart miteinander verbunden sind, dass im Betrieb Wärme von der ersten Desorptionseinheit in die zweite Desorptionseinheit übertragbar ist. Durch die erste Heizvorrichtung wird dem ersten Desorptionsprozess Wärmeenergie zugeführt. Die Heizvorrichtung kann dabei verschiedenartig mit Energie versorgt werden. Vorteilhaft ist ein Betrieb der Heizvorrichtung mit Dampf, welcher durch den Kraftwerksprozess bereitgestellt ist. Ein Betrieb ist auch elektrisch oder induktiv möglich. Durch den ersten Kondensator wird dem ersten Desorptionsprozess Wärmeenergie entzogen und über die zweite Heizvorrichtung in den zweiten Desorptionsprozess übertragen. Die zweite Heizvorrichtung kann zusätzlich mit Dampf versorgt werden oder zusätzlich anderweitig mit Energie betrieben werden.

Bei einer bevorzugten Weiterbildung der fossilbefeuerte Kraftwerksanlage ist diese derart ausgestaltet, dass im Betrieb der Abscheidevorrichtung bei der ersten Desorptionseinheit eine erste Temperatur T1 einstellbar ist, so dass in der zweiten Desorptionseinheit eine zweite Temperatur T2 erzielbar ist, wobei die erste Temperatur T1 höher ist als die zweite Temperatur T2 (T1>T2). Die Einstellung der Temperaturen erfolgt durch die Heizvorrichtungen. Dazu sind an den Heizvorrichtungen Regelventile zur Einstellung des Energieeintrags in die Desorptionseinheiten vorgesehen. Die Wärmeenergie im ersten Desorptionsprozess ist durch einen entsprechenden Energieeintrag dabei derart wählbar, dass durch die Wärmeenergie am ersten Kondensator, noch die zweite Desorptionseinheit mit Wärmeenergie versorgt werden kann. Dies ermöglicht eine Einsparung der notwendigen Energie für die Abscheidevorrichtung.

In einer vorteilhaften Weiterentwicklung der fossilbefeuerte Kraftwerksanlage ist die erste Temperatur T1 durch einen ersten Druck P1 in der ersten Desorptionseinheit einstellbar, wobei der erste Druck P1 höher ist, als ein zweiter Druck P2 in der zweiten Desorptionseinheit. Die Einstellung der unterschiedlichen Temperaturen durch unterschiedliche Drücke ist durch das proportionale Verhalten von Druck und Temperatur zueinander (T∼P) möglich. Zum Einstellen der Drücke sind an den Desorptionseinheiten bzw. an den Teilstromleitungen Regelventile vorgesehen. Durch die unterschiedlichen Drücke sind in den beiden Desorptionsprozessen unterschiedliche Siedetemperaturen erzielbar. Wird durch einen hohen ersten Druck P1 eine hohe Siedetemperatur in der ersten Desorptionseinheit, und durch einen niedrigeren zweiten Druck P2 eine niedrige Siedetemperatur in der zweiten Desorptionseinheit eingestellt, wird ein Sieden in der zweiten Desorptionseinheit durch die übertragene Wärmeenergie aus der ersten Desorptionseinheit erreicht. Dadurch verringert sich der notwendige Energieeintrag für das Kohlendioxid-Abtrennungsverfahren.

Bei einer besonderen Weiterbildung der fossilbefeuerte Kraftwerksanlage ist die zweite Desorptionseinheit über eine Auslassleitung für ein Gas- Dampfgemisch mit einer Pumpvorrichtung verbunden, so dass im zweiten Desorptionsprozess der zweite Druck P2 über die Pumpleistung der Pumpvorrichtung einstellbar ist. Die Pumpvorrichtung ermöglicht somit eine Reduzierung des zweiten Drucks, auch unterhalb des Atmosphärendrucks. Als Pumpvorrichtung kann eine Vakuumpumpe zum Einsatz kommen. Zweckmäßigerweise ist zwischen zweiter Desorptionseinheit und Pumpvorrichtung ein Kondensator geschaltet. Durch den Kondensator ist dampfförmiges Absorptionsmedium aus dem Gas- Dampfgemisch weitgehend abtrennbar, so dass die Pumpvorrichtung weitgehend mit dem gasförmigen Kohlendioxid beaufschlagt ist. Die Anordnung der Pumpvorrichtung an einer anderen Stelle, beispielsweise am Gehäuse der zweiten Desorptionseinheit, ist möglich.

Zweckmäßigerweise ist durch die erste Heizvorrichtung und die zweite Heizvorrichtung aus einem Absorptionsmedium Kohlendioxid thermisch austreibbar. Dies gestattet die Verwendung der Wärme die in der Kraftwerksanlage vorhanden ist.

In einer vorteilhaften Weiterbildung der fossilbefeuerten Kraftwerksanlage ist die Absorptionsvorrichtung als eine entlang einer vertikalen Achse ausgerichteten Säule ausgestaltet, wobei die Säule im oberen Bereich einen Einlass und im unteren Bereich einen Auslass aufweist, so dass im Betrieb regeneriertes Absorptionsmedium im oberen Bereich einführbar ist, und beladenes Absorptionsmedium im unteren Bereich ausleitbär ist, und dass durch die Absorptionsvorrichtung kohlendioxidhaltiges Abgas leitbar ist, so dass eine Durchströmung nach dem Gegenstromprinzip von kohlendioxidhaltigem Abgas und Absorptionsmedium bewirkt ist. Solche Säulen sind in der chemischen Industrie auch als Kolonnen bekannt und dienen dazu, Stoffgemische durch thermische Verfahren zu trennen. Dies erfolgt unter Ausnutzung von Gleichgewichtszuständen zwischen unterschiedlichen Phasen.

Bei einer weiteren vorteilhaften Weiterbildung der fossilbefeuerten Kraftwerksanlage ist die erste Desorptionseinheit als eine entlang einer vertikalen Achse ausgerichteten Säule ausgestaltet, wobei die Säule im oberen Bereich einen Einlass und im unteren Bereich einen Auslass aufweist, so dass im Betrieb ein erstes beladenes Absorptionsmedium im oberen Bereich einführbar und im unteren Bereich ein erstes regeneriertes Absorptionsmedium ausleitbar ist, so dass eine Durchströmung der ersten Desorptionseinheit mit beladenem Absorptionsmedium bewirkt ist. Ebenso ist es von Vorteil, auch die zweite Desorptionseinheit als eine entlang einer vertikalen Achse ausgerichteten Säule auszugestalten, wobei die Säule im oberen Bereich einen Einlass und im unteren Bereich einen Auslass aufweist, so dass im Betrieb ein zweites beladenes Absorptionsmedium im oberen Bereich einführbar und im unteren Bereich ein zweites regeneriertes Absorptionsmedium ausleitbar ist, so dass eine Durchströmung der zweiten Desorptionseinheit mit beladenem Absorptionsmedium bewirkt ist.

Es ist vorteilhaft einen ersten Vorwärmer sekundärseitig in die erste Teilstromleitung zu schalten und primär zuleitend mit dem Einlass der Absorptionsvorrichtung und primär ableitend mit dem Auslass der ersten Desorptionseinheit zu verbinden, so dass im Betrieb eine Vorwärmung für das beladene Absorptionsmedium und eine Abkühlung für das regenerierte Absorptionsmedium bewirkt ist. Dabei ist die primäre Seite die Energie abgebende Seite und die sekundäre Seite die Energie aufnehmende Seite. Ebenso vorteilhaft ist es, einen zweiten Vorwärmer vorzusehen, der primärseitig in die zweite Teilstromleitung geschaltet ist, so dass im Betrieb eine Vorwärmung für das beladene Absorptionsmedium bewirkt ist, und dass der zweite Vorwärmer sekundär zuleitend mit dem Einlass der Absorptionsvorrichtung und sekundär ableitend mit dem Auslass der zweiten Desorptionseinheit verbunden ist, so dass eine Abkühlung für das regenerierte Absorptionsmedium bewirkt ist. Die Funktionsweise von erstem und zweitem Vorwärmer entspricht dabei der eines Wärmetauschers. Durch diese Anordnung kann im System freiwerdende Wärmeenergie an geeigneter Stelle wieder dem System zugeführt werden.

In einer bevorzugten Ausgestaltung der fossilbefeuerten Kraftwerksanlage sind der erste Kondensator und die zweite Heizvorrichtung eine Baueinheit. Als Baueinheit erfüllen Kondensator und Heizvorrichtung die Funktion eines Wärmetauschers.

Bei einer besonderen Weiterbildung der fossilbefeuerte Kraftwerksanlage ist die Abscheidevorrichtung derart ausgestaltet, dass diese mit einem für die Aufnahme von Kohlendioxid geeigneten Absorptionsmedium, insbesondere einem Waschmittel für Kohlendioxid, betreibbar ist. Dafür sind zusätzlich entsprechende Tanks für reines und beladenes Absorptionsmedium, Rohrleitungen, Ventile und Mess-, Kontroll- und Steuerelemente vorgesehen.

Als Absorptionsmedium wird vorzugsweise ein Fluid verwendet. Gegenüber einem Feststoff bietet ein Fluid einen erheblichen Vorteil bei der Durchleitung. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Besonders vorteilhaft ist die Verwendung aus einer Lösung aus H₂O und Aminderivaten als Waschmittel. Bekannt sind beispielsweise Lösungen unter den Namen MEA (Mono-Ethanolamin) und MDEA (Methyldiethanolamin).

In einer vorteilhaften Weiterbildung der fossilbefeuerte Kraftwerksanlage umfasst die erste Desorptionseinheit einen ersten Auslass für Kohlendioxid für einen ersten Kohlendioxidteilstrom, und die zweite Desorptionseinheit einen zweiten Auslass für Kohlendioxid für einen zweiten Kohlendioxidteilstrom, und der erste Auslass für Kohlendioxid ist mit dem zweiten Auslass für Kohlendioxid derart verbunden, dass im Betrieb der Abscheidevorrichtung Kohlendioxid aus dem ersten Auslass für Kohlendioxid und dem zweiten Auslass für Kohlendioxid zu einem Gesamtstrom zusammenführbar ist. Das zusammengeführte Kohlendioxid kann einer weiteren Verwendung zugeführt werden.

In einer bevorzugten Ausgestaltung ist die fossilbefeuerte Kraftwerksanlage eine Dampfkraftwerksanlage, welche wenigstens einen befeuerten Kessel und wenigstens eine Dampfturbine umfasst. In einer weiteren bevorzugten Ausgestaltung ist die fossilbefeuerte Kraftwerksanlage eine Gas- und Dampfturbinenkraftwerksanlage, welche wenigstens eine Gasturbine und einen der Gasturbine abgasseitig nachgeschalteten Abhitzedampferzeuger umfasst, der in wenigstens einen Wasser-Dampf-Kreislauf einer Dampfturbine geschaltet ist. Die Implementierung der beschriebenen Abscheidevorrichtung in andere fossilbefeuerte Kraftwerke ist dann ebenso sinnvoll, wenn die Abscheidevorrichtung vorhandene oder abfallende Energie des Kraftwerks nutzen kann.

In einer vorteilhaften Weiterbildung der fossilbefeuerte Kraftwerksanlage ist die erste Heizvorrichtung über eine Anzapfleitung mit der Dampfturbine verbunden, so dass die Heizwärme aus dem Dampf der Dampfturbine entnehmbar ist. Die Anzapfung kann z.B. zwischen dem Hoch- und Niederdruckteil der Dampfturbine angeordnet sein.

Bei einer weiteren vorteilhaften Weiterbildung der fossilbefeuerte Kraftwerksanlage umfasst die erste Teilstromleitung eine erste Regelvorrichtung und die zweite Teilstromleitung eine zweite Regelvorrichtung, so dass die Teilströme einstellbar sind. Die Regelvorrichtung kann ein Ventil und eine Steuereinheit umfassen.

Weitere Vorteile der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend werden Ausführungsbeispiele der Erfindung anhand der beigefügten schematischen Zeichnungen näher erläutert. Es zeigt:
- FIG 1: eine schematische Skizze eines Kohlendioxid-Abtrennungsverfahrens.
- FIG 2: ein Ausführungsbeispiel eines Kohlendioxid-Abtrennungsverfahrens einer fossilbefeuerten Kraftwerksanlage.
- FIG 3: ein Ausführungsbeispiel einer Dampfkraftwerksanlage als fossilbefeuerten Kraftwerksanlage mit Kohlendioxid-Abscheidevorrichtung.
- FIG 4: ein Ausführungsbeispiel einer Gas- und Dampfturbinen-kraftwerksanlage als fossilbefeuerten Kraftwerksanlage mit einer Kohlendioxid-Abscheidevorrichtung.

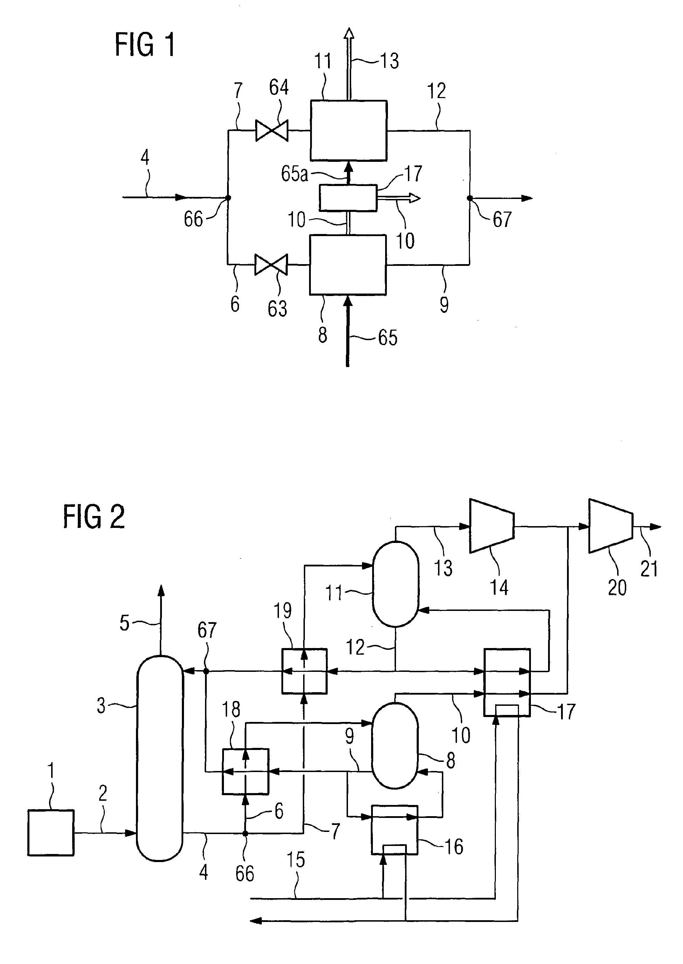

Die in FIG 1 dargestellte schematische Skizze des erfindungsgemäßen Kohlendioxid-Abtrennungsverfahrens einer fossilbefeuerten Kraftwerksanlage umfasst im Wesentlichen einen ersten Desorptionsprozess 8 und einen zweiten Desorptionsprozess 11. Anhand der dargestellten schematischen Skizze soll das Prinzip der Erfindung veranschaulicht werden. Dazu wird hier der Desorptionsprozess im Detail dargestellt.

Ein beladendes Absorptionsmedium 4 aus einem Absorptionsprozess wird durch eine Aufteilung 66 in einen ersten Teilstrom 6 und einen zweiten Teilstrom 7 aufgezweigt. Durch einen ersten Regelprozess 63 im ersten Teilstrom 6 und einem zweiten Regelelement 64 im zweiten Teilstrom wird das Verhältnis von beladenem Absorptionsmedium 4 zwischen erstem Teilstrom 6 und zweiten Teilstrom 7 eingestellt. Die Einstellung des Verhältnisses kann auch an anderer Stelle oder direkt an der Aufteilung 66 erfolgen.

Der erste Teilstrom 6 wird dem ersten Desorptionsprozess 8 zugeführt. In dem ersten Desorptionsprozess 8 erfolgt unter Zuführung von Wärmeenergie 65 eine Abgabe von Kohlendioxid von dem beladenen Absorptionsmedium 4. Dabei werden ein erstes regeneriertes Absorptionsmedium 9 und ein erstes Gas-Dampfgemisch 10 gebildet. Das erste Gas- Dampfgemisch 10 wird einem dem ersten Desorptionsprozess nachgeschalteten zweiten Wärmetauscherprozess 17 zugeführt, in dem Wärmeenergie 65 von dem Gas- Dampfgemisch entzogen wird. Der Wärmetauscherprozess kann auch als kombinierter Kondensations- und Heizprozess ausgestaltet werden.

Der zweite Teilstrom 7 wird dem zweiten Desorptionsprozess 11 zugeführt. In dem zweiten Desorptionsprozess 11 wird unter Zuführung der Wärmeenergie 65a aus dem Wärmetauscherprozess 17 Kohlendioxid von dem beladenen Absorptionsmedium 4 abgegeben. Dabei werden ein zweites regeneriertes Absorptionsmedium 12 und ein zweites Gas-Dampfgemisch 13 gebildet.

Das erste regenerierte Absorptionsmedium 9 und das zweite regenerierte Absorptionsmedium 12 werden durch eine Zusammenführung zu einem Strom aus regeneriertem Absorptionsmedium vereinigt.

Das in Fig. 2 gezeigte Ausführungsbeispiel eines Kohlendioxid-Abtrennungsverfahrens zeigt im Wesentlichen einen Verbrennungsprozess 1, einen Absorptionsprozess 3, einen ersten Desorptionsprozess 8, einen zweiten Desorptionsprozess 11, einen ersten Wärmetauscherprozess 16 und einen zweiten Wärmetauscherprozess 17.

Ein in dem Verbrennungsprozess 1 entstehendes kohlendioxidhaltiges Abgas 2 wird dem Absorptionsprozess 3 zugeführt. Nicht gezeigt ist ein Dampferzeugungsprozess, der zwischen Verbrennungsprozess 1 und dem Absorptionsprozess 3 geschaltet werden kann. In dem Absorptionsprozess 3 wird Kohlendioxid aus dem kohlendioxidhaltigen Abgas 2 durch ein Absorptionsmedium aufgenommen. Den Absorptionsprozess 3 verlassen ein beladenes Absorptionsmedium 4 sowie ein gereinigtes Abgas 5.

Das beladene Absorptionsmedium 4 wird an einer Aufteilung 66 in einen ersten Teilstrom 6 und einen zweiten Teilstrom 7 aufgeteilt. Die Möglichkeit, die Teilströme einstellen zu können, ist hier nicht dargestellt.

Der erste Teilstrom 6 aus beladenem Absorptionsmedium 4 wird in einem ersten Vorwärmprozess 18 erwärmt und dem ersten Desorptionsprozess 8 zugeführt. In dem ersten Desorptionsprozess wird Kohlendioxid von dem beladenen Absorptionsmedium 4 abgegeben. Dabei werden ein erstes Gas- Dampfgemisch 10 aus gasförmigem Kohlendioxid und dampfförmigem Absorptionsmedium und ein erstes regeneriertes Absorptionsmedium 9 gebildet. Dem Gas- Dampfgemisch 10 wird in einem dem ersten Desorptionsprozess 9 nachgeschalteten zweiten Wärmetauscherprozess 17 Wärme entzogen. Nicht gezeigt ist hier eine mögliche Rückführung des in dem zweiten Wärmetauscher 17 entstehenden Kondensats aus Absorptionsmedium. Ein Teil des regenerierten Absorptionsmediums 9 wird dem ersten Vorwärmprozess 18 zugeführt. Ein anderer Teil wird dem ersten Wärmetauscherprozess 16 zugeführt, in dem es erwärmt wird. Anschließend wird es wieder dem ersten Desorptionsprozess 8 zugeführt und liefert somit die notwendige Wärmeenergie für den ersten Desorptionsprozess 8.

Der zweite Teilstrom 7 des beladenen Absorptionsmediums 4 wird in einem zweiten Vorwärmprozess 19 erwärmt und dem zweiten Desorptionsprozess 11 zugeführt. In dem zweiten Desorptionsprozess 11 wird Kohlendioxid von dem beladenen Absorptionsmedium 4 abgegeben. Dabei werden ein zweites Gas- Dampfgemisch 13 aus gasförmigem Kohlendioxid und dampfförmigem Absorptionsmedium und ein erstes regeneriertes Absorptionsmedium 12 gebildet. Ein Teil des regenerierten Absorptionsmediums 12 wird dem zweiten Vorwärmprozess 19 zugeführt. Ein anderer Teil wird dem Wärmetauscherprozess 17 zugeführt, wobei es erwärmt wird. Im Anschluss wird das erwärmte, regenerierte Absorptionsmedium 12 wieder dem zweiten Desorptionsprozess 11 zurückgeführt, und liefert somit die notwendige Wärmeenergie für den zweiten Desorptionsprozess 11.

Das zweite Gas- Dampfgemisch aus dem zweiten Desorptionsprozess wird einem Pumpprozess 14 zugeführt. Durch den Pumpprozess 14 wird ein Druck P2 im zweiten Desorptionsprozess eingestellt. Nicht gezeigt ist ein dem zweiten Desorptionsprozess nachgeschalteter Wärmetauscherprozess, in welchem dem zweiten Gas- Dampfgemisch 13 Wärme entzogen wird. Das dabei entstehende kondensierte Absorptionsmedium kann einem Kreislauf für Absorptionsmedium an geeigneter Stelle rückgeführt werden.

Das den Pumpprozess 14 verlassende zweite Gas- Dampfgemisch 14 wird mit dem ersten Gas- Dampfgemisch 10 zu einem Strom aus Gas- Dampfgemisch zusammengeführt und in Komprimierungsprozess 20 verdichtet. Den Komprimierungsprozess 20 verlässt ein komprimiertes oder verflüssigtes Kohlendioxid. In Fig. 2 wird nicht die Möglichkeit gezeigt, dabei entstehendes Kondensat aus Absorptionsmedium einem Kreislauf für Absorptionsmedium zurückzuführen.

In dem ersten Wärmetauscherprozess 16 wird Wärme von einem Dampf 15 auf einen Teil des regenerierten Absorptionsmediums 9 übertragen. Der Dampf kann beispielsweise aus einem hier nicht gezeigten Dampferzeugungsprozess entnommen werden.

In dem Vorwärmprozess 18 wird Wärme von dem regenerierten Absorptionsmedium 9 auf das beladene Absorptionsmedium 4 im ersten Teilstrom 6 übertragen. Analog dazu wird in dem Vorwärmprozess 19 Wärme von dem regenerierten Absorptionsmedium 12 auf das beladene Absorptionsmedium 4 im zweiten Teilstrom 7 übertragen. Dadurch wird zum einen eine Abkühlung des regenerierten Absorptionsmediums 9 und 12 und eine Erwärmung des beladenen Absorptionsmediums 4 im ersten Teilstrom 6 und im zweiten Teilstrom 7 erreicht. Im Anschluss werden der erste Teilstrom aus regenerierten Absorptionsmedium 9 und der zweite Teilstrom aus regeneriertem Absorptionsmedium an einer Zusammenführung 67 zu einem Strom aus regeneriertem Absorptionsmedium zusammengeführt und wieder dem Absorptionsprozess 3 zur Verfügung gestellt. Dadurch wird ein Kreislauf für Absorptionsmedium zwischen dem Absorptionsprozess 3 und den Desorptionsprozessen 8 und 11 gebildet.

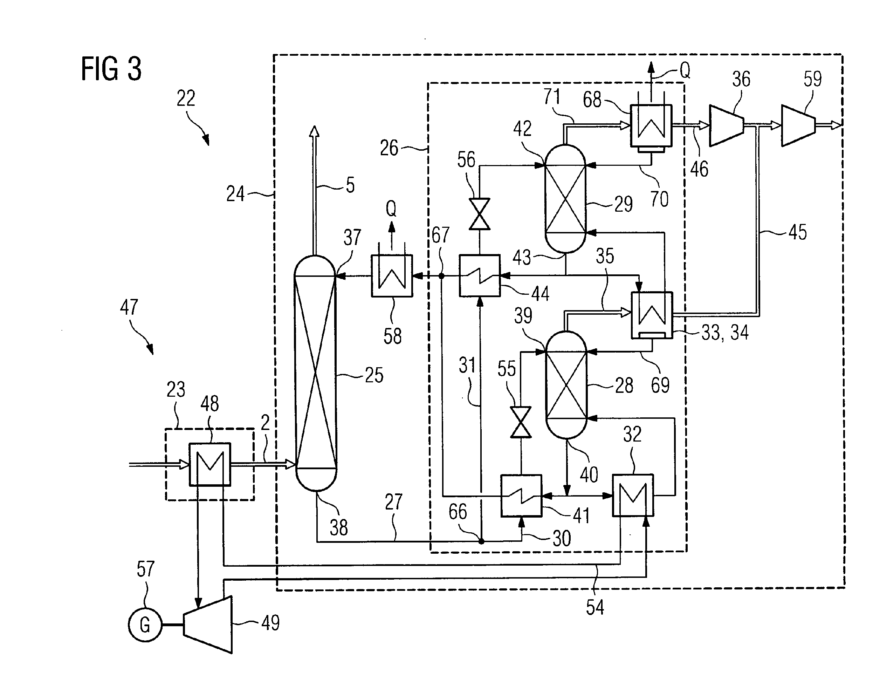

Die in FIG 3 dargestellte fossilbefeuerte Kraftwerksanlage 22 zeigt eine Dampfkraftwerksanlage 47 mit integrierter Abscheidevorrichtung für Kohlendioxid 24. Diese besteht aus einer Verbrennungsvorrichtung 23 und einer der Verbrennungsvorrichtung 23 nachgeschalteten Abscheidevorrichtung 24. Die gezeigte Verbrennungsvorrichtung 23 umfasst eine hier nicht dargestellten Brennkammer und einen befeuerten Kessel 48. Die Verbrennungsvorrichtung 23 ist abgasleitend mit der Abscheidevorrichtung 24 verbunden. Der befeuerte Kessel 48 ist über eine Dampfleitung mit einer Dampfturbine 49 verbunden, durch welche ein Generator 57 antreibbar ist.

Die Abscheidevorrichtung 24 besteht aus einer Absorptionsvorrichtung 25, einem Wärmetauscher 58, einer Desorptionsvorrichtung 26, einer Pumpvorrichtung 36 und einem Verdichter 59. Die Abscheidevorrichtung 25 weist einen Einlass 37 und einen Auslass 38 auf.

Der Auslass 38 der Absorptionsvorrichtung 25 ist über eine Verbindungsleitung 27 fluidleitend mit der Aufteilung 66 verbunden. An der Aufteilung 66 erfolgt eine Aufzweigung in eine erste Teilstromleitung 30 und eine zweite Teilstromleitung 31.

Die Desorptionsvorrichtung 26 besteht aus einer ersten Desorptionseinheit 28 und einer zweiten Desorptionseinheit 29, einer Aufteilung 66 und einer Zusammenführung 67, einem ersten Vorwärmer 41 und einem zweiten Vorwärmer 44, einer ersten Regelvorrichtung 55 und einer zweiten Regelvorrichtung 56, sowie aus einer ersten Heizvorrichtung 32, einer zweiten Heizvorrichtung 34, einem ersten Kondenstor 33 und einem zweiten Kondensator 68. Die erste Desorptionseinheit 28 weist einen Einlass 39 und einen Auslass 40 auf, und die zweite Desorptionseinheit 29 einen Einlass 42 und einen Auslass 43.

Die Vorwärmer 41 und 44 entsprechen der Funktionsweise eines Wärmetauschers. Dabei ist definitionsgemäß die Primärseite die Energie abgebende Seite und die Sekundärseite die Energie aufnehmende Seite.

Die erste Teilstromleitung 30 verbindet die Aufteilung 66 mit der sekundären Zuleitung des ersten Vorwärmers 41. Sekundär ableitend ist der Vorwärmer 41 mit dem Einlass 39 der ersten Desorptionseinheit 28 verbunden. Zwischen Vorwärmer 41 und erster Desorptionseinheit 28 ist eine erste Regelvorrichtung 55 geschaltet. Die zweite Teilstromleitung 31 verbindet die Aufteilung 66 mit der sekundären Zuleitung des zweiten Vorwärmers 44. Sekundär ableitend ist der zweite Vorwärmer 44 mit einem Einlass 42 der zweiten Desorptionseinheit 29 verbunden. In die Verbindungsleitung zwischen dem Vorwärmer 44 und dem Einlass 42 ist eine zweite Regelvorrichtung 56 geschaltet. Nicht gezeigt wird hier eine mögliche Verschaltung, in welcher die Regelvorrichtungen 55 und 56 jeweils zwischen den Vorwärmern 41 und 44 und der Aufteilung 66 oder an der Aufteilung 66 selbst angeordnet sind.

Eine Auslassleitung 35 verbindet die erste Desorptionseinheit 28 mit dem Kondensator 33 derart, dass ein in der ersten Desorptionseinheit 28 entstehendes erstes Gas-Dampfgemisch dem ersten Kondensator 33 zuführbar ist. Der erste Kondensator 33 weist einen ersten Auslass für Kohlendioxid 45 und eine erste Rückführleitung für kondensiertes Absorptionsmedium 69 auf. Die erste Rückführleitung für kondensiertes Absorptionsmedium 69 ist mit der ersten Desorptionseinheit 28 verbunden. Der erste Kondensator 33 bildet zudem in der hier gezeigten Ausführungsform der Figur 3 eine Baueinheit mit der zweiten Heizvorrichtung 34, und erfüllt somit die Funktion eines Wärmetauschers. Im Betrieb der Abscheidevorrichtung 24 ist somit ein Übertrag von Wärmeenergie von dem ersten Kondensator 33 zu der zweiten Heizvorrichtung 34 gegeben. Dabei ist primärseitig dem ersten Gas-Dampfgemisch Energie entnehmbar, und sekundärseitig diese Energie auf ein Absorptionsmedium in der zweiten Desorptionseinheit 29 übertragbar.

Ein in dem ersten Desorptionsprozess 28 entstehendes regeneriertes Absorptionsmedium ist über einen Auslass 40 ausleitbar. Dazu ist der Auslass 40 über eine Teilleitung sekundär zuleitend mit der ersten Heizvorrichtung 32 verbunden, und über eine weitere Teilleitung primär zuleitend mit dem ersten Vorwärmer 41. Die erste Heizvorrichtung 32 ist sekundär ableitend mit dem ersten Desorptionsprozess 28 verbunden. Primärseitig ist die erste Heizvorrichtung 32 mit einer Anzapfleitung 54 verbunden. Im Betrieb der Kraftwerksanlage 22 ist somit zwischen der ersten Desorptionseinheit 28 und der ersten Heizvorrichtung 32 ein Heizkreislauf für einen Teil des regenerierten Absorptionsmediums gegeben.

Eine Auslassleitung 71 verbindet die zweite Desorptionseinheit 29 mit dem Kondensator 68 derart, dass ein in der zweiten Desorptionseinheit 29 entstehendes zweites Gas-Dampfgemisch dem zweiten Kondensator 68 zuführbar ist. Der zweite Kondensator 68 umfasst einen zweiten Auslass für Kohlendioxid 46 und eine zweite Rückführleitung für kondensiertes Absorptionsmedium 70. Die zweite Rückführleitung für kondensiertes Absorptionsmedium 70 ist mit der zweiten Desorptionseinheit 29 verbunden. Der zweite Auslass für Kohlendioxid 46 ist über eine Leitung mit der Saugseite der Pumpvorrichtung 36 verbunden. Die Druckseite der Pumpvorrichtung 36 und der erste Auslass für Kohlendioxid 45 sind über eine Leitung mit der Saugseite des Verdichters 59 verbunden.

Ein in dem zweiten Desorptionsprozess 29 entstehendes regeneriertes Absorptionsmedium ist über einen Auslass 43 ausleitbar. Der Auslass 43 ist über eine Teilleitung sekundär zuleitend mit der zweiten Heizvorrichtung 34 verbunden, und über eine weitere Teilleitung primär zuleitend mit dem zweiten Vorwärmer 44. Die zweite Heizvorrichtung 34 ist sekundär ableitend wiederum mit der zweiten Desorptionseinheit 29 verbunden. Im Betrieb der Kraftwerksanlage 22 ist somit zwischen der zweiten Desorptionseinheit 29 und der zweiten Heizvorrichtung 34 ein Heizkreislauf für einen Teil des regenerierten Absorptionsmediums gegeben.

Der erste Vorwärmer 41 und der zweite Vorwärmer 44 sind jeweils über ,Leitungen primär ableitend mit der Zusammenführung 67 verbunden. Die Zusammenführung 67 wiederum ist primär zuleitend verbunden mit dem Wärmetauscher 58. In dem Wärmetauscher 58 ist einem durchleitbaren Absorptionsmedium Wärme entziehbar. Primär ableitend ist der Wärmetauscher 58 mit dem Einlass 37 der Absorptionsvorrichtung 25 verbunden. Somit ist im Betrieb der Kraftwerksanlage 22 zwischen der Absorptionsvorrichtung 25 und der Desorptionsvorrichtung 26 ein Kreislauf für ein Absorptionsmedium gebildet.

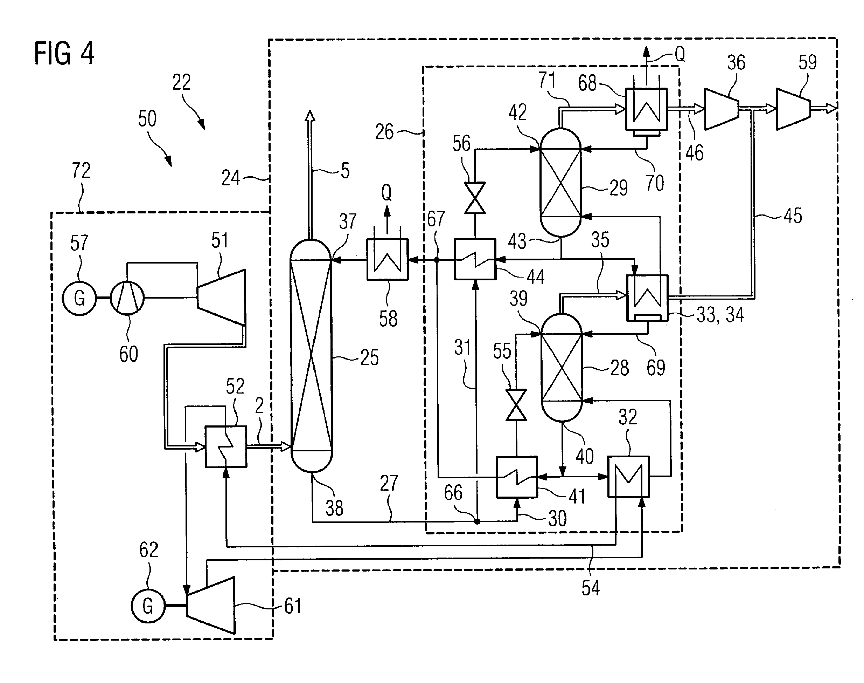

Die in Fig. 4 dargestellte fossilbefeuerte Kraftwerksanlage 22 zeigt eine Gas- und Dampfturbinenkraftwerksanlage 50 mit integrierter Abscheidevorrichtung für Kohlendioxid 24. Die gezeigte Gas- und Dampfturbinenkraftwerksanlage 50 umfasst eine Gasturbine 51, die über eine Welle einen Verdichter 60 und einen Generator 57 antreibt, einen der Gasturbine 51 abgasseitig nachgeschalteten Abhitzedampferzeuger 52, der durch die Gasturbine 51 befeuert ist und für die Dampferzeugung bereitgestellt ist, eine Dampfturbine 61, die über eine Welle mit einem Generator 62 verbunden ist und die mit einer Dampfleitung mit dem Abhitzedampferzeuger 52 verbunden ist. Der Abhitzedampferzeuger 52 ist abgasleitend mit der Abscheidevorrichtung 24 verbunden. Die nachgeschaltete Abscheidevorrichtung 24 ist im Wesentlichen analog ausgestaltet wie in Fig. 3 der Dampfkraftwerksanlage 47.

Mit der Erfindung ist der Betrieb eines im Kohlendioxidausstoß reduzierten Kraftwerks mit hoher Effizienz möglich. Dabei wird das Absorptionsmedium zur Abtrennung von Kohlendioxid in zumindest zwei parallel zueinander stattfindenden Desorptionsprozessen von Kohlendioxid regeneriert. Dadurch sind die Desorptionsprozesse bei unterschiedlichen Bedingungen durchführbar, und somit die überschüssige Energie eines ersten Desorptionsprozesses für einen zweiten Desorptionsprozess nutzbar. Die Vorrichtung zum Abtrennen von Kohlendioxid aus einem kohlendioxidhaltigen Abgas ist dabei Bestandteil der fossilbefeuerten Kraftwerksanlage. Durch die integrierte schaltungstechnische Verbesserung ist eine wesentliche Effizienzsteigerung gegenüber einer herkömmlichen Gasreinigungseinrichtung einer fossilbefeuerten Kraftwerksanlage erzielbar.

## Patentansprüche

1. Verfahren zum Abtrennen von Kohlendioxid aus einem Abgas einer fossilbefeuerten Kraftwerksanlage, bei dem
a) in einem Verbrennungsprozess (1) ein fossiler Brennstoff verbrannt wird, wobei ein kohlendioxidhaltiges Abgas (2) erzeugt wird,
b) in einem Absorptionsprozess (3) kohlendioxidhaltiges Abgas (2) mit einem Absorptionsmedium in Kontakt gebracht wird, wobei Kohlendioxid von dem Absorptionsmedium aufgenommen wird, wobei ein beladenes Absorptionsmedium (4) und ein gereinigtes Abgas (5) gebildet wird, das von Kohlendioxid weitgehend befreit ist,
c) das beladene Absorptionsmedium (4) in wenigstens einen ersten Teilstrom (6) und einen zweiten Teilstrom (7) aufgeteilt wird,
d) der erste Teilstrom (6) einem ersten Desorptionsprozess (8) zugeführt wird, wobei ein erstes regeneriertes Absorptionsmedium (9) und ein erstes Gas-Dampfgemisch (10) aus gasförmigen Kohlendioxid und dampfförmigen Absorptionsmedium gebildet wird, und der zweite Teilstrom (7) einem zweiten Desorptionsprozess (11) zugeführt wird, wobei Wärmeenergie aus dem ersten Desorptionsprozess (8) dem zweiten Desorptionsprozess (11) zugeführt wird.

2. Verfahren nach Anspruch 1, bei dem im zweiten Desorptionsprozess (11) ein zweites regeneriertes Absorptionsmedium (12) und ein zweites Gas-Dampfgemisch (13) aus gasförmigem Kohlendioxid und dampfförmigen Absorptionsmedium gebildet werden.

3. Verfahren nach Anspruch 1 oder 2, bei dem die dem zweiten Desorptionsprozess (11) zur Verfügung gestellte Wärmeenergie aus dem ersten Gas-Dampfgemisch (10) entnommen wird.

4. Verfahren nach einem der Ansprüche 1 bis 3, bei dem der erste Desorptionsprozess (8) bei einer ersten Temperatur (T1) durchgeführt wird, die höher eingestellt wird als eine zweite Temperatur (T2) bei welcher der zweite Desorptionsprozess (11) durchgeführt wird.

5. Verfahren nach einem der Ansprüche 1 bis 4, bei dem die
erste Temperatur (T1) durch einen ersten Druck (P1) im ersten Desorptionsprozess (8) eingestellt wird, wobei dieser erste Druck (P1) höher eingestellt wird als ein zweiter Druck (P2) im zweiten Desorptionsprozess (11).

6. Verfahren nach einem der Ansprüche 1 bis 5, bei dem der
zweite Druck (P2) über einen dem zweiten Desorptionsprozess (11) nachgeschalteten Pumpprozess (14) eingestellt wird.

7. Verfahren nach einem der Ansprüche 1 bis 6, bei dem in dem ersten Desorptionsprozess (8) und in dem zweiten Desorptionsprozess (11) Kohlendioxid thermisch ausgetrieben wird.

8. Verfahren nach einem der Ansprüche 1 bis 7, bei dem der erste Teilstrom (6) und der zweite Teilstrom (7) eingestellt werden.

9. Verfahren nach Anspruch 8, bei dem der erste Teilstrom (6) und der zweite Teilstrom (7) zu gleichen Teilen aufgeteilt werden.

10. Verfahren nach einem der Ansprüche 1 bis 9, wobei ein Fluid als Absorptionsmedium verwendet wird.

11. Verfahren nach Anspruch 10, wobei eine Flüssigkeit, ein Gas, ein Aerosol oder eine Suspension als Fluid verwendet wird.

12. Verfahren nach Anspruch 11 wobei ein verdampfbares Lösungsmittel als Flüssigkeit verwendet wird.

13. Verfahren nach Anspruch 12, wobei eine Lösung aus H₂O und Aminderivaten als Lösungsmittel verwendet wird.

14. Verfahren nach einem der Ansprüche 1 bis 13, bei welchem dem ersten Desorptionsprozess (8) Wärmeenergie durch Dampf (15) zugeführt wird, wobei der Dampf (15) in einem ersten Wärmetauscherprozess (16) mit dem beladenen Absorptionsmedium (4) im Wärmetausch geführt wird.

15. Verfahren nach einem der Ansprüche 1 bis 14, bei dem in einem ersten Vorwärmprozess (18) Wärme von dem ersten regenerierten Absorptionsmedium (9) entzogen wird, und an den ersten Teilstrom (6) abgegeben wird.

16. Verfahren nach einem der Ansprüche 1 bis 15, bei dem in einem zweiten Vorwärmprozess (19) Wärme von dem zweiten regenerierten Absorptionsmedium (12) entzogen wird, und an den zweiten Teilstrom (7) abgegeben wird.

17. Verfahren nach einem der Ansprüche 1 bis 16, bei dem das abgetrennte Kohlendioxid aus dem ersten Desorptionsprozess (8) mit dem Kohlendioxid aus dem zweiten Desorptionsprozess (11) zusammengeführt wird.

18. Verfahren nach einem der Ansprüche 1 bis 17, bei dem das abgetrennte Kohlendioxid in einem Komprimierungsprozess (20) komprimiert wird, wobei ein komprimiertes oder verflüssigtes Kohlendioxid (21) entsteht.

19. Verfahren nach Anspruch 18, bei dem das komprimierte oder verflüssigte Kohlendioxid (21) gespeichert wird.

20. Verfahren nach einem der vorhergehenden Ansprüche, **gekennzeichnet durch** eine Anwendung bei einem fossilbefeuerten Dampfkraftwerk.

21. Verfahren nach einem der Ansprüche 1 bis 19, **gekennzeichnet durch** eine Anwendung bei einer kombinierten Gas- und Dampfturbinen-Kraftwerksanlage.

22. Fossilbefeuerte Kraftwerksanlage (22) mit einer einer
Verbrennungsvorrichtung (23) nachgeschalteten und von einem kohlendioxidhaltigen Abgas (2) durchströmbaren Abscheidevorrichtung (24) für Kohlendioxid, wobei die Abscheidevorrichtung (24) eine Absorptionsvorrichtung (25) zur Aufnahme von Kohlendioxid aus dem kohlendioxidhaltigen Abgas (2) und eine Desorptionsvorrichtung (26) zur Abgabe des aufgenommenen Kohlendioxids umfasst, wobei die Absorptionsvorrichtung (25) über eine Verbindungsleitung (27), mit der Desorptionsvorrichtung (26) verbunden ist,
**dadurch gekennzeichnet, dass** die Desorptionsvorrichtung (26) eine erste Desorptionseinheit (28) und wenigstens eine zweite Desorptionseinheit (29) aufweist, und dass von der Verbindungsleitung (27) eine erste Teilstromleitung (30) und eine zweite Teilstromleitung (31) abzweigt, wobei die erste Teilstromleitung (30) mit der ersten Desorptionseinheit (28) verbunden ist und die zweite Teilstromleitung (31) mit der zweiten Desorptionseinheit (29) verbunden ist.

23. Fossilbefeuerte Kraftwerksanlage (22) nach Anspruch 22,
**dadurch gekennzeichnet, dass** die erste Desorptionseinheit (28) eine erste Heizvorrichtung (32) und einen ersten Kondensator (33) und die zweite Desorptionseinheit (29) eine zweite Heizvorrichtung (34) umfasst, wobei der erste Kondensator (33) und die zweite Heizvorrichtung (34) derart miteinander verbunden sind, dass im Betrieb Wärme von der ersten Desorptionseinheit (28) in die zweite Desorptionseinheit (29) übertragbar ist.

24. Fossilbefeuerte Kraftwerksanlage (22) nach einem der Ansprüche 22 bis 23, **dadurch gekennzeichnet, dass** diese
derart ausgestaltet ist, dass im Betrieb der Abscheidevorrichtung (25) bei der ersten Desorptionseinheit (28) eine erste Temperatur (T1) einstellbar ist, so dass in der zweiten Desorptionseinheit (29) eine zweite Temperatur (T2) erzielbar ist, wobei die erste Temperatur (T1) höher ist als die zweite Temperatur (T2).

25. Fossilbefeuerte Kraftwerksanlage (22) nach einem der Ansprüche 22 bis 24, **dadurch gekennzeichnet, dass** die erste Temperatur (T1) durch einen ersten Druck (P1) in der ersten Desorptionseinheit (28) einstellbar ist, wobei der erste Druck (P1) höher ist, als ein zweiter Druck (P2) in der zweiten Desorptionseinheit (29).

26. Fossilbefeuerte Kraftwerksanlage (22) nach Anspruch 25,
**dadurch gekennzeichnet, dass** die zweite Desorptionseinheit (29) über eine Auslassleitung (35) für ein Gas-Dampfgemisch mit einer Pumpvorrichtung (36) verbunden ist, so dass im zweiten Desorptionsprozess (29) der zweite Druck (P2) über die Pumpleistung der Pumpvorrichtung (36) einstellbar ist.

27. Fossilbefeuerte Kraftwerksanlage (22) nach einem der Ansprüche 22 bis 26, **dadurch gekennzeichnet, dass** durch die erste Heizvorrichtung (32) und die zweiten Heizvorrichtung (34) aus einem Absorptionsmedium Kohlendioxid thermisch austreibbar ist.

28. Fossilbefeuerte Kraftwerksanlage (22) nach einem der Ansprüche 22 bis 27, **dadurch gekennzeichnet, dass** die Absorptionsvorrichtung (25) als eine entlang einer vertikalen Achse ausgerichteten Säule ausgestaltet ist, wobei die Säule im oberen Bereich einen Einlass (37) und im unteren Bereich einen Auslass (38) aufweist, so dass im Betrieb regeneriertes Absorptionsmedium im oberen Bereich einführbar ist, und beladenes Absorptionsmedium im unteren Bereich ausleitbar ist, und dass durch die Absorptionsvorrichtung (25) kohlendioxidhaltiges Abgas (2) leitbar ist, so dass eine Durchströmung nach dem Gegenstromprinzip von kohlendioxidhaltigem Abgas (2) und Absorptionsmedium bewirkt ist.

29. Fossilbefeuerte Kraftwerksanlage (22) nach einem der Ansprüche 22 bis 28, **dadurch gekennzeichnet, dass** die erste Desorptionseinheit (28) als eine entlang einer vertikalen Achse ausgerichteten Säule ausgestaltet ist, wobei die
Säule im oberen Bereich einen Einlass (39) und im unteren Bereich einen Auslass (40) aufweist, so dass im Betrieb erstes beladenes Absorptionsmedium im oberen Bereich einführbar und im unteren Bereich ein erstes regeneriertes Absorptionsmedium ausleitbar ist, so dass eine Durchströmung der ersten Desorptionseinheit mit beladenen Absorptionsmediums bewirkt ist.

30. Fossilbefeuerte Kraftwerksanlage (22) nach Anspruch 29,
**dadurch gekennzeichnet, dass** ein erster Vorwärmer (41) sekundärseitig in die erste Teilstromleitung (30) geschaltet ist, so dass im Betrieb eine Vorwärmung für das beladene Absorptionsmedium bewirkt ist, und dass der erste Vorwärmer (41) primär zuleitend mit dem Auslass der ersten Desorptionseinheit (40) und primär ableitend mit dem Einlass der Absorptionsvorrichtung (37) verbunden ist, so dass eine Abkühlung für das regenerierte Absorptionsmedium bewirkt ist.

31. Fossilbefeuerte Kraftwerksanlage (22) nach einem der Ansprüche 22 bis 30, **dadurch gekennzeichnet, dass** die zweite Desorptionseinheit (29) als eine entlang einer vertikalen Achse ausgerichteten Säule ausgestaltet ist, wobei die Säule im oberen Bereich einen Einlass (42) und im unteren Bereich einen Auslass (43) aufweist, so dass im Betrieb zweites beladenes Absorptionsmedium im oberen Bereich einführbar und im unteren Bereich ein zweites regeneriertes Absorptionsmedium ausleitbar ist, so dass eine Durchströmung der zweiten Desorptionseinheit (29) mit beladenen Absorptionsmediums bewirkt ist.

32. Fossilbefeuerte Kraftwerksanlage (22) nach Anspruch 31,
**dadurch gekennzeichnet, dass** ein zweiter Vorwärmer (44) sekundärseitig in die zweite Teilstromleitung (31) geschaltet ist, so dass im Betrieb eine Vorwärmung für das beladene Absorptionsmedium bewirkt ist, und dass der zweite Vorwärmer (44) primär zuleitend mit dem Auslass der zweiten Desorptionseinheit (43) und primär ableitend mit dem Einlass der Absorptionsvorrichtung (37) verbunden ist, so dass eine Abkühlung für das regenerierte Absorptionsmedium bewirkt ist.

33. Fossilbefeuerte Kraftwerksanlage (22) nach einem der Ansprüche 22 bis 32, **dadurch gekennzeichnet, dass** der erste Kondensator (33) und die zweite Heizvorrichtung (34) eine Baueinheit sind.

34. Fossilbefeuerte Kraftwerksanlage (22) nach einem der Ansprüche 22 bis 33, **dadurch gekennzeichnet, dass** die Abscheidevorrichtung (25) derart ausgestaltet ist, dass diese mit einem für die Aufnahme von Kohlendioxid geeigneten Absorptionsmedium, insbesondere einem Waschmittel für Kohlendioxid, betreibbar ist.

35. Fossilbefeuerte Kraftwerksanlage (22) nach Anspruch 34,
**dadurch gekennzeichnet, dass** die Abscheidevorrichtung für den Betrieb mit einer Lösung aus Aminderivaten als Absorptionsmedium ausgestaltet ist.

36. Fossilbefeuerte Kraftwerksanlage (22) nach einem der Ansprüche 22 bis 35, **dadurch gekennzeichnet, dass** die erste Desorptionseinheit (28) einen ersten Auslass für Kohlendioxid (45) für einen ersten Kohlendioxidteilstrom aufweist, und dass die zweite Desorptionseinheit (29) einen zweiten Auslass für Kohlendioxid (46) für einen zweiten Kohlendioxidteilstrom aufweist, und dass der erste Auslass für Kohlendioxid (45) mit dem zweiten Auslass für Kohlendioxid (46) derart verbunden ist, dass im Betrieb der Abscheidevorrichtung (24) Kohlendioxid aus dem ersten Auslass für Kohlendioxid (45) und dem zweiten Auslass für Kohlendioxid (46) zu einem Gesamtstrom zusammenführbar ist.

37. Fossilbefeuerte Kraftwerksanlage (22) nach einem der Ansprüche 22 bis 36, **gekennzeichnet durch** eine Ausgestaltung als Dampfkraftwerk (47), umfassend wenigstens einen befeuerten Kessel (48) und wenigstens eine Dampfturbine (49).

38. Fossilbefeuerte Kraftwerksanlage (22) nach einem der Ansprüche 22 bis 37, **gekennzeichnet durch** eine Ausgestaltung als Gas- und Dampfturbinenanlage (50), umfassend wenigstens eine Gasturbine (51) und einen der Gasturbine (51) abgasseitig nachgeschalteten Abhitzedampferzeuger (52), der in wenigstens einen Wasser-Dampf-Kreislauf einer Dampfturbine (53) geschaltet ist.

39. Fossilbefeuerte Kraftwerksanlage (22) nach einem der Ansprüche 37 bis 38, **dadurch gekennzeichnet, dass** die erste Heizvorrichtung (32) über eine Anzapfleitung (54) mit der Dampfturbine (53, 49) verbunden ist, so dass die Heizwärme aus dem Dampf entnehmbar ist.

40. Fossilbefeuerte Kraftwerksanlage (22) nach einem der Ansprüche 22 bis 39, bei dem die erste Teilstromleitung (30) eine erste Regelvorrichtung (55) aufweist und die zweite Teilstromleitung (31) eine zweite Regelvorrichtung (56) aufweist, so dass die Teilströme einstellbar sind.
